# EUROPEAN PATENT SPECIFICATION

(11) **EP 1 416 785 B1**
(45) Date of publication and mention of the grant of the patent: **22.06.2005**
(21) Application number: 02796189.5
(22) Date of filing: 13.08.2002
(51) Int. Cl.: A01C 23/00, B05B 1/14, A01M 7/00, B05B 1/04

(54) **A NOZZLE**
DÜSE
BUSE

(30) Priority: 13.08.2001 DK 200101211
(43) Date of publication of application: 12.05.2004
(73) Proprietor: HARDI INTERNATIONAL A/S, 2630 Taastrup (DK)
(72) Inventor: NORMAN, Thomas, DK-2670 Greve Strand (DK)
(74) Representative: Sundien, Thomas
(86) International application number: PCT/DK2002/000533
(87) International publication number: WO 2003/017748

(56) References cited:
- EP-A1- 0 014 670
- WO-A1-98/37974
- FR-A- 2 188 461
- FR-A1- 2 568 445
- US-A- 3 191 871
- US-A- 4 824 024

## Description

The present invention relates to the use of a nozzle according to claim 1 and to a nozzle having the features of claim 9.

The invention aims to provide an improved alternative for the ordinary fertilising methods, wherein granular fertiliser is distributed across the field by means of a rotating distributor plate in order to be absorbed by the soil. The invention is also based on the well-known finding that liquid fertiliser has to be distributed as concentrated jets and not in the form of a mist of fine droplets. This is due to the fact that the fertiliser liquid has to be able to penetrate through the crop and down into the soil with a minimum of deposition on the crop and with minimal evaporation. Deposition of the fertiliser liquid on the crop may cause the crop to be scorched and also leads to excessive consumption of fertiliser liquid. For a more detailed discussion of this issue, reference should be made to eg GB 2,256,818 that is incorporated herein in its entirety by the present reference.

US patent No. 4,372,494 incorporated herein for reference, teaches an example of a nozzle of the kind described in the introductory part of claim 1. This nozzle is specifically configured for spraying a fertiliser liquid and is mounted on a spraying device constructed especially for this purpose with distributor tubes and nozzle holders. The nozzle has outlet passages located around a central axis of the nozzle and all outlet passages are configured for allowing through-flow of the same amount of liquid.

However, it is a problem in connection with the prior art nozzles for distributing fertiliser liquid by spraying that they do not optimally comply with the requirements for use, when mounted on conventional agricultural sprayers designed specifically for distributing fine droplets of plant protection liquids by spraying. It is desirable for the farmer to avoid having to buy separate spraying assemblies for distributing fertiliser liquid by spraying.

Conventional agricultural sprayers with nozzles for distributing fine droplets of plant protection liquids by spraying are provided with nozzle holders located at fixed mutual distances of eg 50 cm along cantilever booms having lengths of eg 4-18 m. In many cases the cantilever booms are supported in a fixed height, whereby the nozzle holders are kept approximately 50 cm above the soil or the crop. Cantilever booms are mounted resiliently, whereby they may each swing slightly upwards and downwards in a vertical plane. Hereby it is avoided that the advancement of the agricultural sprayer across uneven terrain gives rise to construction failures.

Said up- and downwardly oriented swinging of the cantilever booms gives rise to ongoing variations in the height of the nozzles above the terrain during advancement of the agricultural sprayer and hence in the deposition of liquid per area unit of the field. The same applies to the spraying of fine droplets of plant protection liquid. When fertiliser liquid is discharged, however, these variations give rise to critical variations in the fertiliser supply on the field per area unit of the field.

The invention remedies these drawbacks, since the nozzle can, to a wide extent, be mounted on conventional agricultural sprayers and is able to work within normally occurring height variations of the nozzle holders above the terrain during advancement of the agricultural sprayer across an uneven terrain. More specifically, this is obtained by the features given in the characterising part of claim 1. It is noted that the nozzle can advantageously be configured to be mounted in engagement with existing, conventional nozzle holders. Typically, it will be accomplished by configuration of the inlet portion of the nozzle with the same geometry as the corresponding portion of conventional nozzles for distributing fine droplets of plant protection liquids by spraying, including the ones manufactured by Hardi International A/S. In case of mounting on a conventional agricultural sprayer the concentrated jets will flow in a vertical plane. By the invention it is possible to obtain a maximal distance between the track lines drawn in the terrain by the spraying liquid of about 16 cm in case of boom heights of about 37-70 cm, and thus to obtain an optimised biological utilisation of the fertiliser.

Configuration of the nozzle in accordance with claim 2 enables a further reduction of the risk of critical variations in the fertiliser supply to the field per area unit of the field.

Furthermore, configuration of the nozzle as featured in claim 4 makes it possible to construct it with exceptionally small dimensions, ensuring to a wide extent that the nozzle lends itself for mounting in conventional nozzle holders that are, eg via bayonet sockets, attached to the cantilever boom. Particularly advantageously, the nozzle may further be constructed as featured in claim 5, whereby the nozzle is not only simple to manufacture from an production point of view; the risk of occlusion of the outlet passages due to deposits of particles on nooks and corners is minimised, while simultaneously it is ensured to an increased degree that the liquid is discharged as concentrated jets. Configuration of the outlet passages as featured in claim 8 enables a further reduction in the risk of critical variations in the fertiliser supply on the field per square unit of the field.

The invention will now be explained in further detail with reference to an exemplary embodiment.
Figure 1 is a perspective view of the nozzle, seen in a direction towards the outlet portion;
Figure 2a is a plane depiction of the nozzle, seen in a direction towards the outlet portion;
Figures 2b-2e show respective longitudinal sectional views through the nozzle, along the planes I, II, III and IV shown in Figure 2a.;
Figure 3a shows the spraying pattern originating from three like nozzles of the kind shown in Figure 1 and located at a mutual distance of 50 cm and in a height above the terrain of 50 cm, corresponding to a conventional agricultural sprayer.
Figure 3b shows the distribution of the example shown in Figure 3a of fertiliser liquid sprayed per time unit onto the terrain in the area underneath one of the nozzles and in the overlapping area that is treated by the nozzle in question and by the neighbouring nozzles.
Figures 4a and 4b show corresponding depictions, wherein the height of the nozzles above the terrain is 35 cm.
Figures 5a and 5b show corresponding depictions, wherein the height of the nozzles above the terrain is 70 cm.

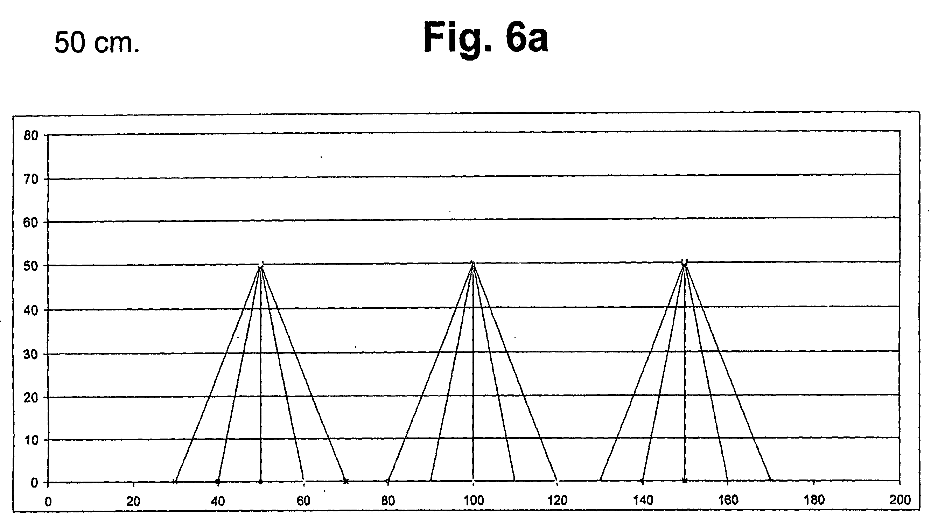

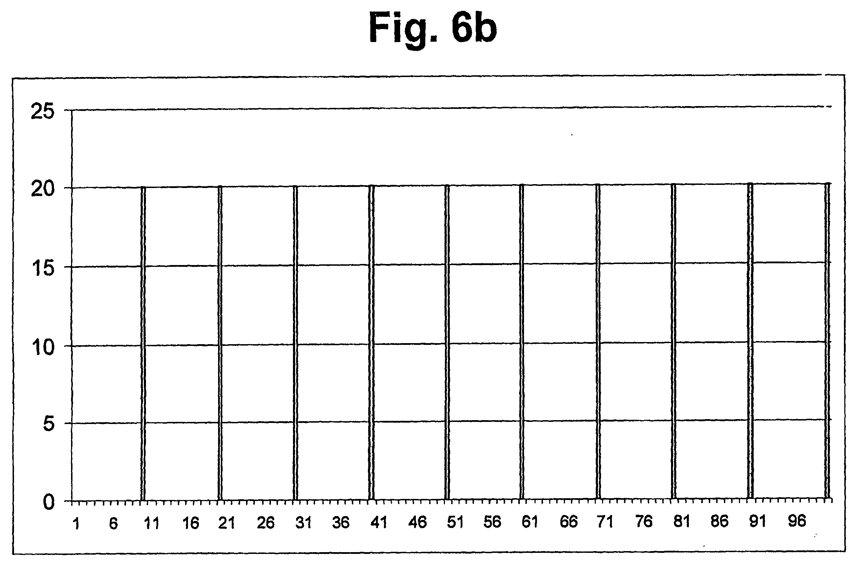

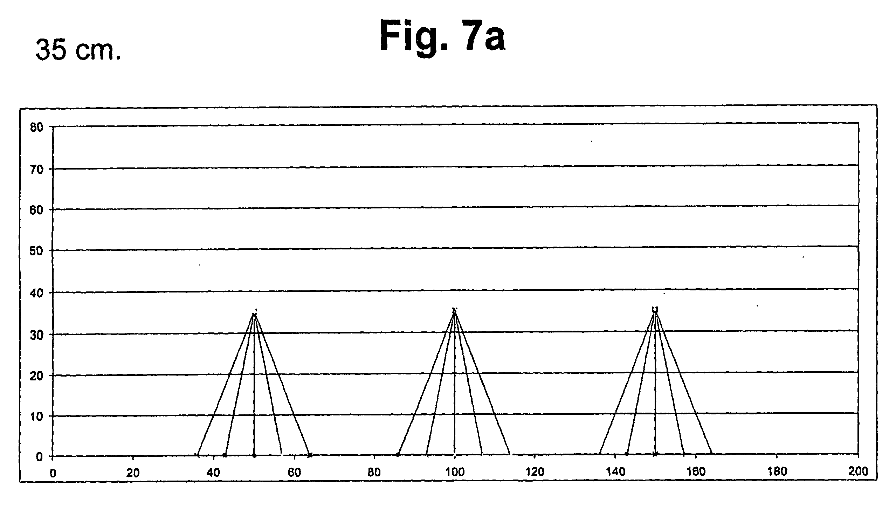

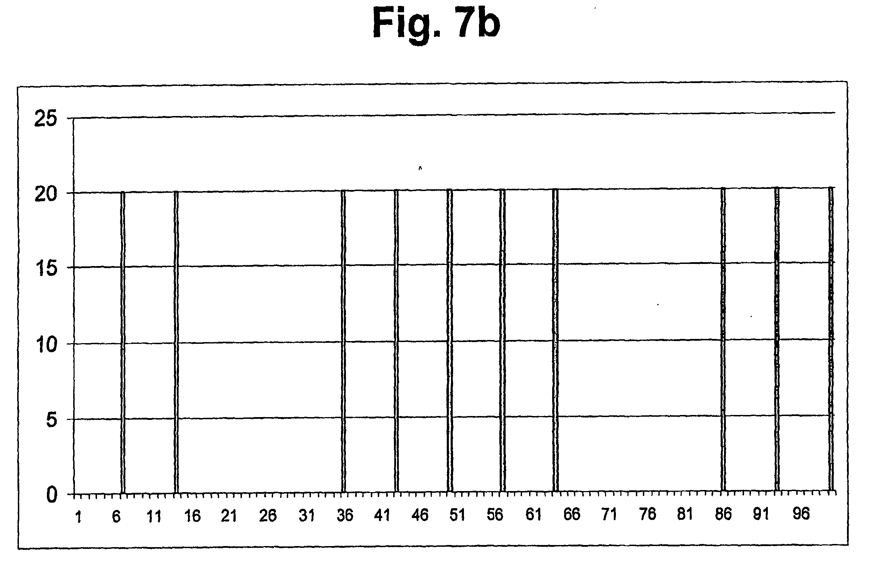

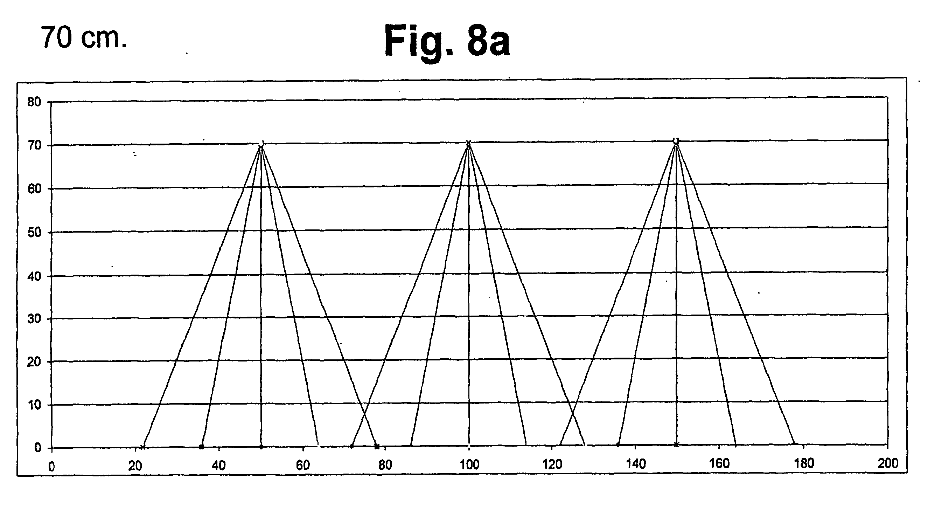

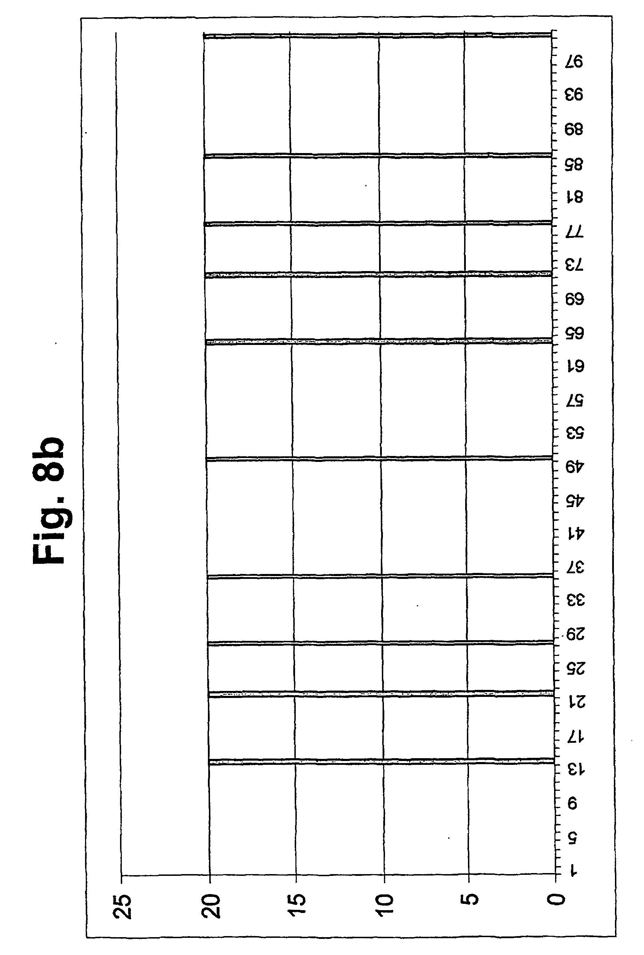

For the sake of comparison, Figures 6a, 6b, 7a, 7b, 8a and 8b show a hypothetical nozzle with five outlet passages with the same mutual angulation and wherein the liquid passage per time unit is the same for all outlet passages.

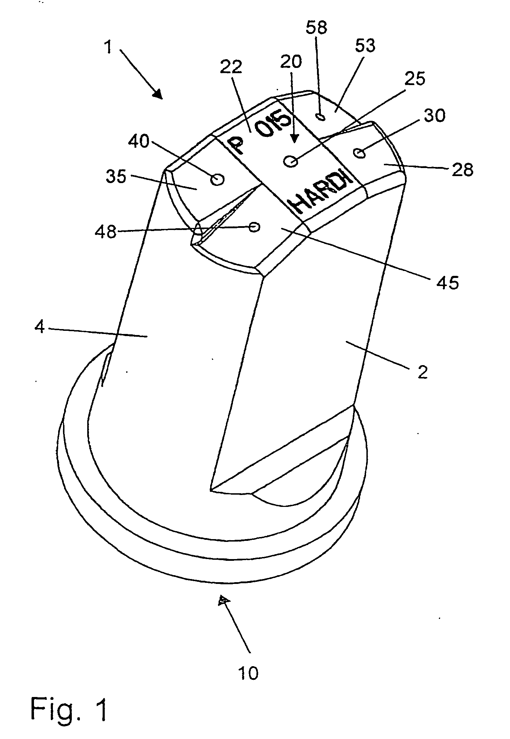

In Figure 1, reference numeral 1 is used to generally designate a nozzle according to the invention. The nozzle has an inlet portion 10, an internal flow passage, and outlet portion in the form of a wall 20 and longitudinally extending sidewalls 2, 4, of which the two opposed sidewalls 2 exhibit plane surfaces. The inlet portion 10 of the nozzle 1 is preferably configured with the same geometry as the corresponding part of conventional nozzles for distributing fine droplets of plant protection liquids by spraying. Hereby it is possible to mount the nozzle 1 in conventional nozzle holders, eg as manufactured by Hardi International A/S in replacement of conventional nozzles for distributing liquid in the form of fine droplets by spraying. In the mounted form on a cantilever boom, the lateral walls 2, 4 are oriented vertically and the wall 20 faces downwards, whereby jets of liquid flow downwards in a vertical plane.

As shown, the wall 20 has five area sections 22, 35, 45, 28, 53, each of which contains a respective outlet passage 25, 30, 40, 48, 58 for the liquid that flows in the through-flow passage from the inlet portion 10. Each section 22, 35, 45, 28, 53 extends transversally to the through-flow passage. The sections 35, 45, 28, 53 are identical in pairs and are located on each side of a central section 22 that extends perpendicular to the through-flow channel of the nozzle 1. The surface of the sections 35, 45, 28, 53 exhibit a unilateral inclination in relation to the surface of the section 22 and thus does not have an inclination in the direction towards the plane sidewalls 2 of the nozzle.

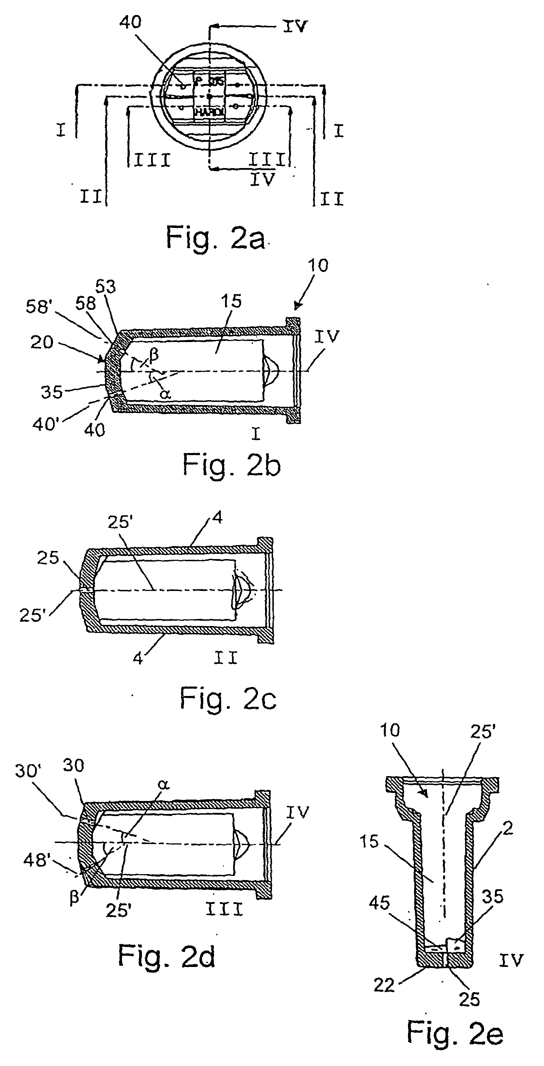

Figures 2b-2e show longitudinal sectional views through the nozzle 1 along the planes I, II, III, IV shown in Figure 2a, and thus show the through-flow passage 15 that extends with a constant rectangular cross section in a direction from the area at the inlet portion 10. The figures also show more detailed views of how each of said sections 22, 35, 45, 28, 53 is provided with an outlet passage 25, 30, 40, 48, 58 with respective flow axes 25', 30', 40', 48', 58'. The outlet passage 25 in the central section 22 is located in such a manner that its flow axis coincides with the flow axis of the through-flow passage 15 and, in the following, the reference numeral 25' will designate this coinciding flow axis.

For all outflow passages 25, 30, 40, 48, 58 it applies that they have a circular cross section and that they extend perpendicular to the exterior surface of the associated section 22, 35, 45, 28, 53. Preferably, the sections 22, 35, 45, 28, 53 have parallel opposed surfaces, of which the one faces inwards towards the through-flow passage 15, whereas the second faces outwards and forms the visible portion of the wall 20 shown in Figure 1. The outlet passages 25, 30, 40, 48, 58 extending perpendicular to the surfaces means that mouthings are provided that have a well-defined geometry that contributes widely to the formation of concentrated liquid jets from the nozzle.

It will appear from the cross-sectional views that the flow axes 40' and 58' are contained in a first plane I that is parallel with a third plane III that contains the flow axes 30', 48'. The first and the third planes are illustrated in Figures 2b and 2d, respectively, and are situated at the same distance on opposed sides of a second plane II shown in Figure 2c that contains the flow axis 25'. Liquid flowing out through the outlet passages will leave the nozzles as concentrated jets that will, to a wide extent, follow the respective planes I, II and III. In a correctly mounted state of the nozzles, the planes I, II and III coincide with the longitudinal expanse of the cantilever boom on which the nozzles are mounted. Thereby a fan-shaped spraying pattern is obtained, wherein the expanse of the fan extends along the cantilever boom.

Additionally, Figures 2b-2d will show how the outlet passages in planes I and III have flow axes oriented with the inclinations α and β, respectively, in relation to a plane IV that extends perpendicular to the planes I, II and III and that contains the central flow axis 25'. In the shown, preferred exemplary embodiment the angle β is approximately 30.5°, while the angle α is about 16°. Figure 2e shows a sectional view through the nozzle 1 along the plane IV that is also indicated in Figures 2b and 2d. The outlet passage 58, whose flow axis 58' forms the angle β, is, as will appear most clearly from Figure 1, arranged obliquely opposite the outlet passage 48, whose flow axis 48' also forms the angle β. In accordance with the invention, the outlet passages have different cross-sectional areas; the outlet passage 25 having the largest cross sectional area, while the cross sectional area decreases in case of increasing inclination of the outlet passages relative to the plane IV. In other words, the outlet passages 48, 58, whose flow axes 48', 58' extend with the largest inclination β, have the smallest cross sectional area. Hereby it is obtained that the amount of liquid that flows out of a given outlet passage decreases the more the outlet passage diverges from the plane IV.

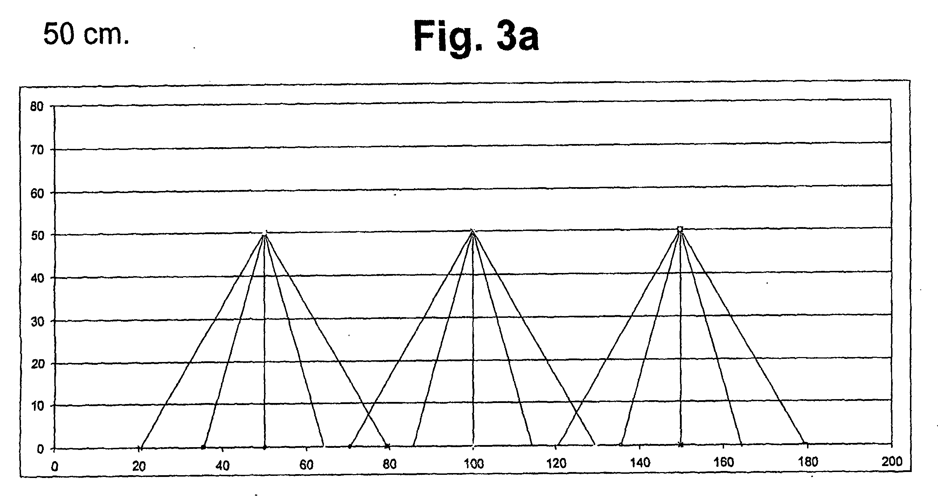

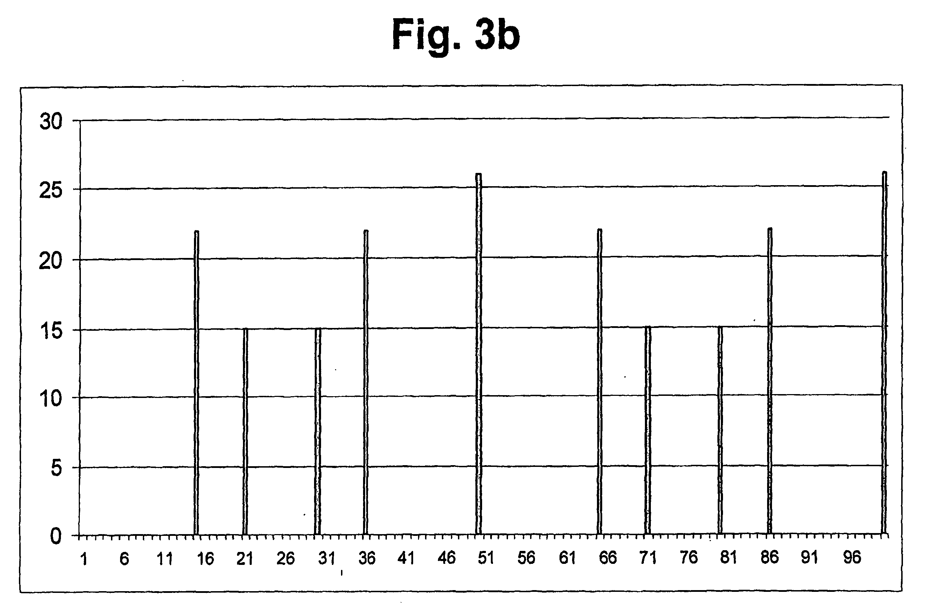

Figure 3a shows three nozzles 1 of the kind shown in Figure 1 arranged along a cantilever boom that extends from the one side of eg an agricultural tractor. The nozzles are arranged at a mutual distance of 50cm and are carried at a height of 50 cm above the terrain. The figure shows liquid jets that extend from respective outlet passages in each nozzle 1. It will appear that the five jets from each nozzle combine to form a fan-like spraying pattern, since the plane IV extends perpendicular on paper, coinciding with the central jet from each nozzle 1. The outermost jets originating from two neighbouring nozzles both reach the same area. The liquid amount per time unit flowing through the corresponding outlet passages being relatively smaller than the amount flowing centrally through the outlet passage 25, the nozzle does not give rise to a considerably increased supply of fertiliser in the area between the nozzles. This is illustrated in Figure 3b, where the columns show the liquid amount conveyed from each outlet passage per time unit.

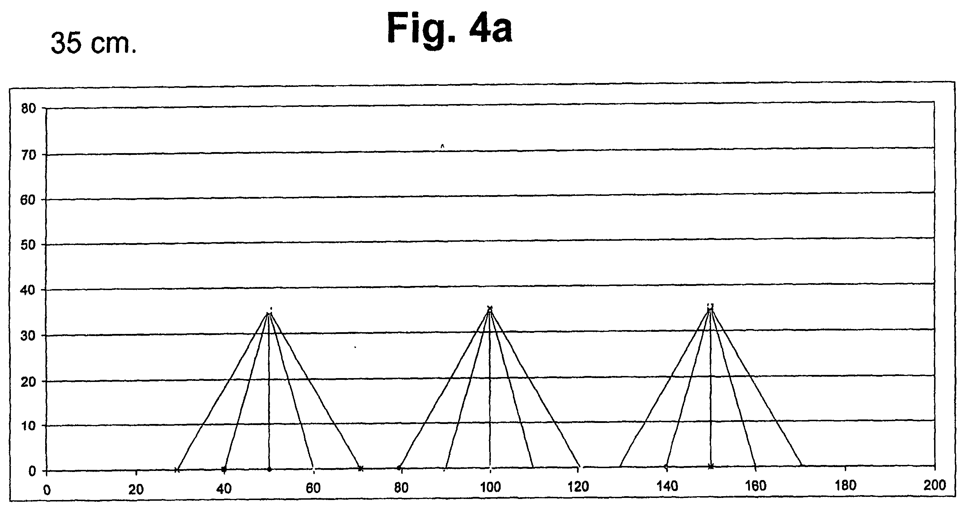

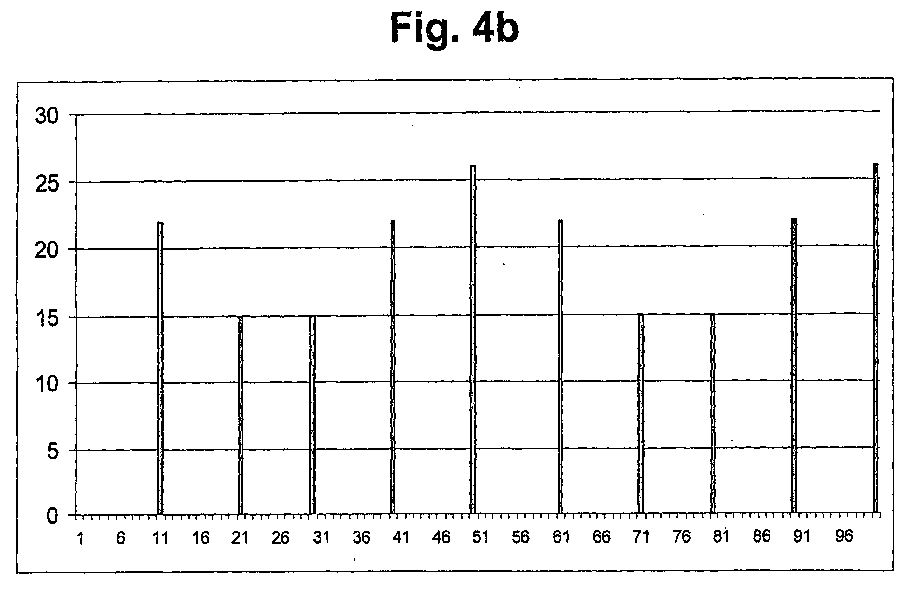

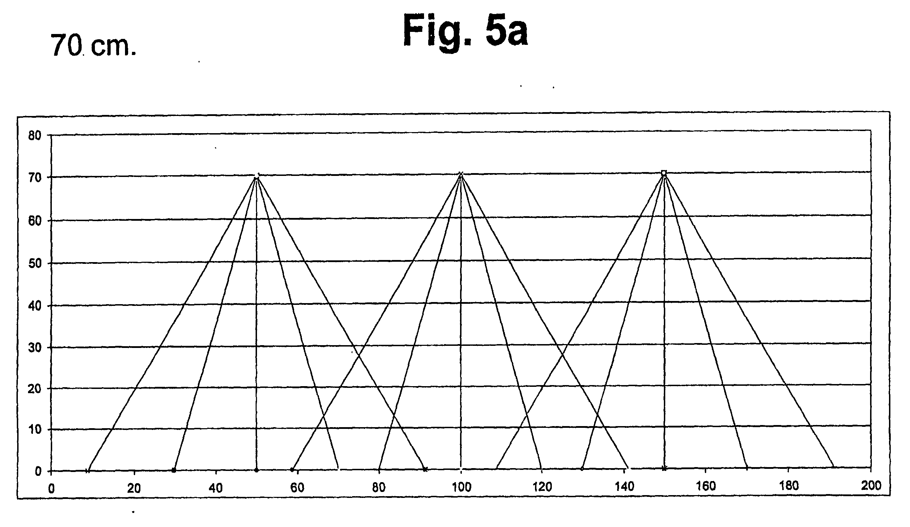

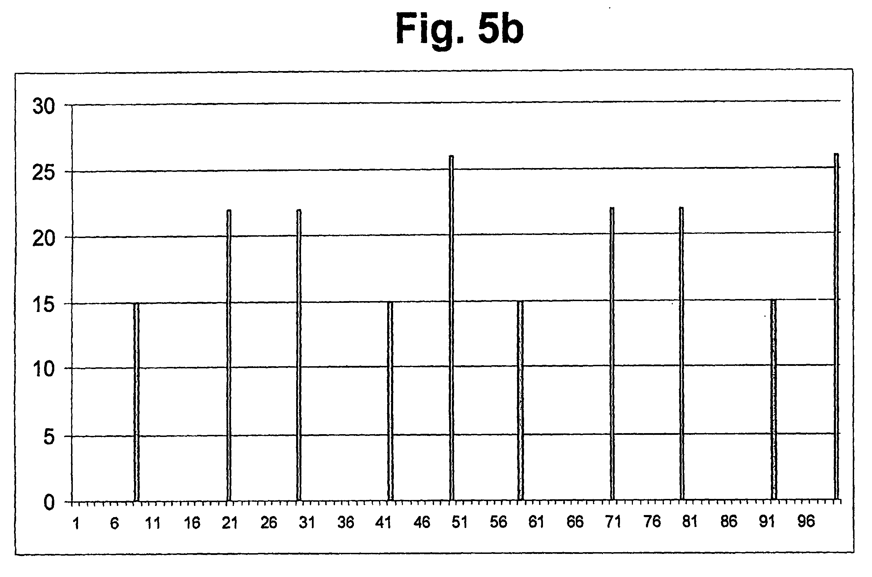

Figures 4a and 4b, Figures 5a and 5b show corresponding data for nozzles 1 of the kind shown in Figure 1 located at heights above the terrain of 35 and 75 cm, respectively. These heights correspond to usual variations in the heights of the nozzles above the terrain, when the cantilever boom swings up and down during advancement across the terrain. Furthermore these heights represent different mounting heights for conventional cantilever booms on agricultural sprayers for discharging fine droplets of plant protection liquids. It will appear that by use of the nozzles according to the invention, uniform supply of fertiliser will be obtained in the vast majority of cases.

For comparison, figures 6a, 6b and Figures 7a, 7b as well as Figures 8a and 8b show corresponding fan-shaped spraying patterns, wherein hypothetical five-hole nozzles are used, wherein the amount discharged from each outlet passage is the same, and wherein the angle α = the angle β.

## Claims

1. The use of a nozzle (1) comprising:
- an inlet portion (10);
- a through-flow passage (15); and
- an outlet portion in the form of a wall (20) that extends transversally to the through-flow passage (15) and having outlet passages (25, 30, 40) that have straight flow axes (25', 30', 40'), each outlet passage being configured to form a concentrated jet of the liquid from the nozzle (1), wherein
- the outlet passages (25, 30, 40) are arranged to form in combination a fan-like and flat or approximately flat spraying pattern;
- a first outlet passage (25) extends centrally in extension of the through-flow passage (15); and wherein
- two like second type outlet passages (30, 40) arranged on a respective side of a plane (IV) containing the flow axis (25') of the first outlet passage (25) have flow axes (30', 40') that diverge away from the plane (IV) under an angle α, said second type outlet passages (30, 40) being configured for allowing through-flow of like amounts of liquid per time unit, said like amount being less than the through-flow through the first outlet passage (25) per time unit,
- said wall (20) comprising two further outlet passages (48, 58) of a third type that has flow axes (48', 58') that diverge away from the plane (IV) under an angle β>α, which third type outlet passages (48, 58) are configured for allowing through-flow of like amounts of liquid per time units, said like amount being less than the through-flow per time unit through said second type outlet passages (30, 40), and said third type outlet passages (48, 58) forming two outer jets in the spraying pattern (A),
- mounted on an extended boom on an agricultural sprayer with a view to spraying fertiliser liquid onto a surface, said plane (IV) being perpendicular to the extension of the boom.

2. Use according to any one of the preceding claims, **characterised in that** the flow axes (25', 30', 40', 48', 58') of all outlet passages (25, 30, 40, 48, 58) extend in a coinciding plane extending along the extension of the boom for forming a flat fan-like spraying pattern.

3. Use according to claim 1, **characterised in that** the flow axes (25', 30', 40', 48', 58') of all outlet passages (25, 30, 40, 48, 58) extend in parallel planes that are slightly displaced relative to each other for forming an approximately flat fan-like spraying pattern, wherein a first plane (I) contains the flow axis (40'), of a flow passage (40) of said second type and the flow axis (58') of a flow passage (58) of said third type; that a second plane (II) contains the flow axis (25') of the first flow passage (25); and that a third plane (III) contains the flow axis (30') of a flow passage (30) of said second type and the flow axis (48') of a flow passage (48) of said third type, said planes (I), (II) and (III) extending along the extension of the boom.

4. Use according to one of the preceding claims, **characterised in that** the wall (20) comprises a plurality of plane wall areas (22, 35, 45, 28, 53) that each contains a respective outlet passage (25, 30, 40, 48, 58) and has a surface which is external relative to the through-flow passage (15) and extends perpendicular to the flow axis (25', 30', 40', 48', 58') of the outlet passage (25, 30, 40, 48, 58) of the wall area (22, 35, 45, 28, 53).

5. Use according to any one of the preceding claims, **characterised in that** the flow passage (15) has a rectangular cross section.

6. Use according to any one of the preceding claims, **characterised in that** the flow passages (25, 30, 40, 48, 58) have a circular cross section.

7. Use according to any one of the preceding claims, 2-7, **characterised in that** the angle β is approximately 1.8-2.2 times as large as the angle α.

8. Use according to any one of the preceding claims 2-8, **characterised in that** the through-flow per time unit through the outlet passages (25; 30; 40; 48; 58) constitutes the ratio of about 1:0.8:0.7.

9. A nozzle (1) for mounting on an agricultural sprayer and intended for spraying a surface with fertiliser liquid, which nozzle (1) comprises:
- an inlet portion (10);
- a through-flow passage (15); and
- an outlet portion in the form of a wall (20) that extends transversally of the through-flow passage (15) and having outlet passages (25, 30, 40) with straight flow axes (25', 30', 40'), each outlet passage being configured to form a concentrated jet of the liquid from the nozzle (1), wherein
- the outlet passages (25, 30, 40) are arranged so as to form in combination a fan-like and flat or approximately flat spraying pattern;
- a first outlet passage (25) extending centrally in extension of the through-flow passage (15); and wherein
- two like second type outlet passages (30, 40) arranged on a respective side of a plane (IV) perpendicular to the boom and containing the flow axis (25') of the first outlet passage (25) have flow axes (30', 40') that diverge way from the plane (IV) under an angle α, which second type outlet passages (30, 40) are configured for allowing through-flow of like amounts of liquid per time unit that is smaller than the through-flow through the first outlet passage (25) per time unit,
- **characterised in that** the wall (20) comprises two further third type outlet passages (48, 58) that has flow axes (48', 58') that diverge away from the plane (IV) under an angle β>α, which third type outlet passages (48, 58) are configured for allowing through-flow of like amounts of liquid per time unit that is smaller than the through-flow through said second type outlet passages (30, 40) per time unit, and said third type outlet passages (48, 58) forming two outer jets in the spraying pattern (A).

10. A nozzle (1) according to claim 9, **characterised in that** the flow axes (25', 30', 40', 48', 58') of all outlet passages (25, 30, 40, 48, 58) extend in parallel planes that are slightly displaced relative to each other for forming an approximately flat fan-like spraying pattern; wherein a first plane (I) contains the flow axis (40') of a flow passage (40) of said second type and the flow axis (58') of a flow passage (58) of said third type passage; that a second plane (II) contains the flow axis (25') of the first flow passage (25); and that a third plane (III) contains the flow axis (30') of a flow passage (30) of said second type and the flow axis (48') of a flow passage (48) of said third type.

11. A nozzle according to claim 9, **characterised in that** the flow axes (25', 30', 40', 48', 58') of all outlet passages (25, 30, 40, 48, 58) extend in a coinciding plane for forming a flat fan-like spray pattern.

12. A nozzle according to any one of the preceding claims 9-11, **characterised In that** the wall (20) comprises a number of plane wall areas (22, 35, 45, 28, 53) that each contains a respective outlet passage (25, 30, 40, 48, 58) and has a surface that is external relative to the through-flow passage (15) and extends perpendicular to the flow axis (25', 30', 40', 48', 58') of the outlet passage (25, 30, 40, 48, 58) of the wall area (22, 35, 45, 28, 53), said planes (I), (II) and (III) extending along the extension of the boom.

13. A nozzle according to any one of the preceding claims 9-12, **characterised in that** the flow passage (15) has a rectangular cross section.

14. A nozzle according to any one of the preceding claims 9-13, **characterised in that** the flow passages (25, 30, 40, 48, 58) have a circular cross section.

15. A nozzle according to any one of the preceding claims 9-14, **characterised in that** the angle β is about 1.8-2.2 times as large as the angle α.

16. A nozzle according to any one of the preceding claims 9-15, **characterised in that** the through-flow per time unit through the outlet passages (25; 30, 40; 48, 58) constitutes the ratio about 1:0.8:1.7.

## Patentansprüche

1. Verwendung einer Düse (1), umfassend
einen Einlaßabschnitt (10),
einen Durchflußkanal (15), und
einen Auslaßabschnitt in Form einer Wand (20), die sich quer zum Durchflußkanal (15) erstreckt und Auslaßkanäle (25, 30, 40) mit geraden Strömungsachsen (25', 30', 40') aufweist, wobei jeder Auslaßkanal so ausgebildet ist, dass er einen konzentrierten Strahl der Flüssigkeit von der Düse (1) bildet,
wobei
die Auslaßkanäle (25, 30, 40) so ausgebildet sind, dass sie eine Kombination eines fächerförmigen und flachen oder ungefähr flachen Sprühmusters bilden, ein erster Auslaßkanal (25) sich zentral in Verlängerung des Durchflußkanals (15) erstreckt, und wobei zwei gleiche zweite Auslaßkanäle (30, 40) an einer entsprechenden Seite einer Ebene (IV), die die Strömungsachse (25') des ersten Auslaßkanals einschließt, angeordnet sind, und Strömungsachsen (30', 40') aufweisen, die von der Ebene (IV) weg in einem Winkel α divergieren, wobei die zweiten Auslaßkanäle (30, 40) so ausgebildet sind, dass sie einen Durchfluß gleicher Flüssigkeitsmengen pro Zeiteinheit ermöglichen, und die gleichen Mengen geringer als der Durchfluß durch den ersten Auslaßkanal (25) pro durch den ersten Auslaßkanal (25) pro Zeiteinheit ist, weiter
die Wand (20) zwei weitere dritte Auslaßkanäle (48, 58) umfaßt, die Strömungsachse (48', 58') aufweisen, die von der Ebene (IV) weg in einem Winkel β>α divergieren, wobei die dritten Auslaßkanäle (48, 58) so ausgebildet sind, dass sie einen Durchfluß gleicher Flüssigkeitsmengen pro Zeiteinheit ermöglichen, und die gleichen Mengen geringer als der Durchfluß pro Zeiteinheit durch die zweiten Auslaßkanäle (30, 40) ist, und die dritten Auslaßkanäle (48, 58) zwei äußere Strahlen in dem Sprühmuster A bilden, und wobei die Düsen an einem verlängerten Ausleger an einer landwirtschaftlichen Sprüheinrichtung zum Sprühen von Düngemittelflüssigkeit auf eine Oberfläche befestigt sind, und die Ebene (IV) sich senkrecht zur Erstreckung des Auslegers erstreckt.

2. Verwendung nach Anspruch 1,
**dadurch gekennzeichnet, dass**
die Strömungsachsen (25', 30', 40', 48', 58') aller Auslaßkanäle (25', 30', 40', 48', 58') sich in einer koinzidierenden Ebene längs der Erstreckung des Auslegers zur Bildung eines flachen, fächerförmigen Sprühmusters erstrecken.

3. Verwendung nach Anspruch 1,
**dadurch gekennzeichnet, dass**
die Strömungsachsen (25', 30', 40', 48', 58') alle Auslaßkanäle (25, 30, 40, 48, 58) sich in parallelen Ebenen erstrecken, die ein wenig relativ zueinander zur Bildung eines ungefähr ebenen, fächerförmigen Sprühmusters versetzt sind, wobei eine erste Ebene (I) die Strömungsachse (40') eines zweiten Strömungskanals (40) und die Strömungsachse (58') eines dritten Strömungskanals (58) einschließt, eine zweite Ebene (II) die Strömungsachse (25') des ersten Strömungskanals (25) einschließt, und eine dritte Ebene (III) die Strömungsachse (30') eines zweiten Strömungskanals (30) und die Strömungsachse (48') eines dritten Strömungskanals (48) einschließt, und sich die Ebenen (I, II, III) längs der Erstreckung des Auslegers erstrecken.

4. Verwendung nach einem der vorherigen Ansprüche,
**dadurch gekennzeichnet, dass**
die Wand (20) mehrere ebener Wandflächen (22, 35, 45, 28, 53) umfaßt, von denen jede einen entsprechenden Auslaßkanal (25, 30, 40, 48, 58) aufweist und eine Oberfläche aufweist, die relativ zu dem Durchflußkanal (15) außen angeordnet ist und sich senkrecht zu den Strömungsachsen (25', 30', 40', 48', 58') der Auslaßkanäle (25, 30, 40, 48, 58) der Wandfläche (22, 35, 45, 28, 53) erstreckt.

5. Verwendung nach einem der vorherigen Ansprüche,
**dadurch gekennzeichnet, dass**
der Strömungskanal (15) einen rechtwinkligen Querschnitt aufweist.

6. Verwendung nach einem der vorherigen Ansprüche,
**dadurch gekennzeichnet, dass**
die Strömungskanäle (25, 30, 40, 48, 58) einen kreisförmigen Querschnitt aufweisen.

7. Verwendung nach einem der vorherigen Ansprüche 2 bis 6,
**dadurch gekennzeichnet, dass**
der Winkel β ungefähr 1,8 - 2,2 mal so groß wie der Winkel α ist.

8. Verwendung nach einem der vorherigen Ansprüche bis 7,
**dadurch gekennzeichnet, dass**
der Durchfluß pro Zeiteinheit durch die Auslaßkanäle (25, 30, 40, 48, 58) das Verhältnis 1 : 0,8 : 0,7 aufweist.

9. Düse (1) zur Befestigung an einer landwirtschaftlichen Sprüheinrichtung zum Besprühen einer Oberfläche mit einer Düngemittelflüssigkeit, wobei die Düse (1) umfaßt:
einen Einlaßabschnitt (10),
einen Durchflußkanal (15), und
einen Auslaßabschnitt in Form einer Wand (20), die sich quer zum Durchflußkanal (15) erstreckt und Auslaßkanäle (25, 30, 40) mit geraden Strömungsachsen (25', 30', 40') aufweist, wobei jeder Auslaßkanal so ausgebildet ist, dass er einen konzentrischen Strahl der Flüssigkeit von der Düse (1) bildet,
wobei die Auslaßkanäle (25, 30, 40) so angeordnet sind, dass sie eine Kombination eines fächerförmigen und flachen oder ungefähr flachen Sprühmusters bilden,
ein erster Auslaßkanal (25) sich zentral in Verlängerung des Durchflußkanals (15) erstreckt, und wobei zwei gleiche zweite Auslaßkanäle (30, 40) an einer entsprechenden Seite einer Ebene (IV), die die Strömungsachse(25') des ersten Auslaßkanals einschließt, angeordnet sind, und Strömungsachsen (30', 40') aufweisen, die von der Ebene (IV) weg in einem Winkel α divergieren, und die zweiten Auslaßkanäle (30, 40) so ausgebildet sind, dass sie einen Durchfluß gleicher Flüssigkeitsmengen pro Zeiteinheit ermöglichen,
wobei die gleichen Mengen geringer als der Durchfluß durch den ersten Auslaßkanal (25) pro Zeiteinheit ist,
**dadurch gekennzeichnet, dass**
die Wand (20) zwei weitere dritte Auslaßkanäle (48, 58) umfaßt, die Strömungsachsen (48', 58') aufweisen, die von der Ebene (IV) weg in einem Winkel β>α divergieren, wobei die dritten Auslaßkanäle (48, 58) so ausgebildet sind, dass sie einen Durchfluß gleicher Flüssigkeitsmengen pro Zeiteinheit ermöglichen, die geringer ist, als die Durchflußmenge durch die zweiten Auslaßkanäle (30, 40) pro Zeiteinheit, und die dritten Auslaßkanäle (48, 58) zwei äußere Strahlen in dem Sprühmittelmuster (A) bilden.

10. Düse (1) nach Anspruch 9,
**dadurch gekennzeichnet, dass**
die Strömungsachsen (25', 30', 40', 48', 58') aller Auslaßkanäle (25, 30, 40, 48, 58) sich in parallelen Ebenen erstrecken, die ein wenig relativ zueinander zur Bildung eines ungefähr ebenen, fächerförmigen Sprühmusters versetzt sind, wobei eine erste Ebene (I) die Strömungsachse (40') eines zweiten Strömungskanals (40) und die Strömungsachse (50') eines dritten Strömungskanals (58) einschließt, eine zweite Ebene (II) die Strömungsachse (25') des ersten Strömungskanals (25) einschließt, und die dritte Ebene (III) die Strömungsachse (30') eines zweiten Strömungskanals (30) und die Strömungsachse (48') eines dritten Strömungskanals (48) einschließt.

11. Düse nach Anspruch 9,
**dadurch gekennzeichnet, dass**
die Strömungsachsen (25', 30', 40', 48', 58') aller Auslaßkanäle (25, 30, 40, 48, 58) sich in einer koinzidierenden Ebene längs der Erstreckung des Auslegers zur Bildung eines flachen, fächerförmigen legers zur Bildung eines flachen, fächerförmigen Sprühmusters erstrecken.

12. Düse nach einem der vorherigen Ansprüche 9 bis 11,
**dadurch gekennzeichnet, dass**
die Wand (20) mehrere ebene Wandflächen (22, 35, 45, 28, 53) umfaßt, von denen jede einen entsprechenden Auslaßkanal (25, 30, 40, 48, 58) aufweist, und eine Oberfläche aufweist, die relativ zu dem Durchflußkanal (15) außen angeordnet ist und sich senkrecht zu den Strömungsachsen (25', 30', 40', 48', 58') des Auslaßkanals (25, 30, 40, 48, 58) der Wandfläche (22, 25, 35, 45, 28, 53) erstreckt, wobei sich die Ebenen (I, II, III) längs der Erstreckung des Auslegers erstrecken.

13. Düse nach einem der vorherigen Ansprüche 9 - 12,
**dadurch gekennzeichnet, dass**
der Strömungskanal (15) einen rechtwinkligen Querschnitt aufweist.

14. Düse nach einem der vorherigen Ansprüche 9 - 13,
**dadurch gekennzeichnet, dass**
die Strömungskanäle (25, 30, 40, 48, 58) einen kreisförmigen Querschnitt aufweisen.

15. Düse nach einem der vorherigen Ansprüche 9 - 14,
**dadurch gekennzeichnet, dass**
der Winkel β ungefähr 1,8 - 2,2 mal so groß wie der Winkel α ist.

16. Düse nach einem der vorherigen Ansprüche 9 - 15,
**dadurch gekennzeichnet, dass**
der Durchfluß pro Zeiteinheit durch die Auslaßkanäle (25, 30, 40, 48, 58) das Verhältnis 1 : 0,8 : 0,7 aufweist.

## Revendications

1. Utilisation d'une buse (1) comportant :
- une partie d'entrée (10);
- un passage d'écoulement (15); et
- une partie de sortie sous la forme d'une paroi (20) qui s'étend transversalement au passage d'écoulement (15) et ayant des passages de sortie (25, 30, 40) qui ont des axes d'écoulement droits (25', 30', 40'), chaque passage de sortie étant configuré pour former un jet concentré du liquide depuis la buse (1), dans laquelle
- les passages de sortie (25, 30, 40) sont disposés afin de former en combinaison un modèle de pulvérisation en éventail et à plat ou approximativement à plat;
- un premier passage de sortie (25) s'étend de manière centrale dans l'extension du passage d'écoulement (15); et dans laquelle
- deux passages de sortie de deuxième type équivalents (30, 40) disposés sur un côté respectif d'un plan (IV) contenant l'axe d'écoulement (25') du premier passage de sortie (25) ont des axes d'écoulement (30', 40') qui divergent à l'écart du plan (IV) sous un angle α, lesdits passages de sortie de deuxième type (30, 40) étant configurés pour permettre un écoulement de quantités équivalentes de liquide par unité de temps, ladite quantité équivalente étant inférieure à l'écoulement à travers le premier passage de sortie (25) par unité de temps,
- ladite paroi (20) comportant deux autres passages de sortie (48, 58) d'un troisième type qui ont des axes d'écoulement (48', 58') qui divergent à l'écart du plan (IV) sous un angle β>α, lesquels passages de sortie de troisième type (48, 58) sont configurés pour permettre un écoulement de quantités équivalentes de liquide par unités de temps, ladite quantité équivalente étant inférieure à l'écoulement par unité de temps à travers lesdits passages de sortie de deuxième type (30, 40), et lesdits passages de sortie de troisième type (48, 58) formant deux jets extérieurs dans le modèle de pulvérisation (A),
- montée sur une flèche étendue d'un pulvérisateur agricole en vue de pulvériser un liquide fertilisant sur une surface, ledit plan (IV) étant perpendiculaire à l'extension de la flèche.

2. Utilisation selon l'une quelconque des revendications précédentes, **caractérisée en ce que** les axes d'écoulement (25', 30', 40', 48', 58') de tous les passages de sortie (25, 30, 40, 48, 58) s'étendent dans un plan qui coïncide s'étendant le long de l'extension de la flèche afin de former un modèle de pulvérisation en éventail plat.

3. Utilisation selon la revendication 1, **caractérisée en ce que** les axes d'écoulement (25', 30', 40', 48', 58') de tous les passages de sortie (25, 30, 40, 48, 58) s'étendent dans des plans parallèles qui sont légèrement décalés l'un par rapport à l'autre afin de former un modèle de pulvérisation en éventail approximativement plat, un premier plan (I) contenant l'axe d'écoulement (40') d'un passage d'écoulement (40) dudit deuxième type et l'axe d'écoulement (58') d'un passage d'écoulement (58) dudit troisième type; **en ce qu'**un deuxième plan (II) contient l'axe d'écoulement (25') du premier passage d'écoulement (25); et **en ce qu'**un troisième plan (III) contient l'axe d'écoulement (30') d'un passage d'écoulement (30) dudit deuxième type et l'axe d'écoulement (48') d'un passage d'écoulement (48) dudit troisième type, lesdits plans (I), (II) et (III) s'étendant le long de l'extension de la flèche.

4. Utilisation selon l'une des revendications précédentes, **caractérisée en ce que** la paroi (20) comprend une multiplicité de zones de paroi planes (22, 35, 45, 28, 53) qui contiennent chacune un passage de sortie respectif (25, 30, 40, 48, 58) et ont une surface qui est externe par rapport au passage d'écoulement (15) et s'étend perpendiculairement à l'axe d'écoulement (25', 30', 40', 48', 58') du passage de sortie (25, 30, 40, 48, 58) de la zone de paroi (22, 35, 45, 28, 53).

5. Utilisation selon l'une quelconque des revendications précédentes, **caractérisée en ce que** le passage d'écoulement (15) a une section rectangulaire.

6. Utilisation selon l'une quelconque des revendications précédentes, **caractérisée en ce que** les passages d'écoulement (25, 30, 40, 48, 58) ont une section circulaire.

7. Utilisation selon l'une quelconque des revendications précédentes, 2 à 7, **caractérisée en ce que** l'angle β est approximativement de 1,8 à 2,2 fois l'angle α.

8. Utilisation selon l'une quelconque des revendications 2 à 8 précédentes, **caractérisée en ce que** l'écoulement par unité de temps à travers les passages de sortie (25; 30; 40; 48; 58) constitue le rapport d'environ 1 : 0,8 : 0,7.

9. Buse (1) pour montage sur un pulvérisateur agricole et prévue pour pulvériser sur une surface un liquide fertilisant, laquelle buse (1) comporte :
- une partie d'entrée (10);
- un passage d'écoulement (15); et
- une partie de sortie sous la forme d'une paroi (20) qui s'étend transversalement au passage d'écoulement (15) et ayant des passages de sortie (25, 30, 40) avec des axes d'écoulement droits (25', 30', 40'), chaque passage de sortie étant configuré pour former un jet concentré du liquide depuis la buse (1), dans laquelle
- les passages de sortie (25, 30, 40) sont disposés afin de former en combinaison un modèle de pulvérisation en éventail et à plat ou approximativement à plat;
- un premier passage de sortie (25) s'étend de manière centrale dans l'extension du passage d'écoulement (15); et dans laquelle
- deux passages de sortie de deuxième type équivalents (30, 40) disposés sur un côté respectif d'un plan (IV) perpendiculaire à la flèche et contenant l'axe d'écoulement (25') du premier passage de sortie (25) ont des axes d'écoulement (30', 40') qui divergent à l'écart du plan (IV) sous un angle α, lesquels passages de sortie de deuxième type (30, 40) sont configurés pour permettre un écoulement de quantités équivalentes de liquide par unité de temps qui est plus faible que l'écoulement à travers le premier passage de sortie (25) par unité de temps,
- **caractérisée en ce que** la paroi (20) comporte deux autres passages de sortie de troisième type (48, 58) qui ont des axes d'écoulement (48', 58') qui divergent à l'écart du plan (IV) sous un angle β>α, lesquels passages de sortie de troisième type (48, 58) sont configurés pour permettre un écoulement de quantités équivalentes de liquide par unité de temps qui est inférieur à l'écoulement à travers lesdits passages de sortie de deuxième type (30, 40) par unité de temps, et lesdits passages de sortie de troisième type (48, 58) forment deux jets extérieurs dans le modèle de pulvérisation (A).

10. Buse selon la revendication 9, **caractérisée en ce que** les axes d'écoulement (25', 30', 40', 48', 58') de tous les passages de sortie (25, 30, 40, 48, 58) s'étendent dans des plans parallèles qui sont légèrement décalés l'un par rapport à l'autre afin de former un modèle de pulvérisation en éventail approximativement plat, un premier plan (I) contenant l'axe d'écoulement (40') d'un passage d'écoulement (40) dudit deuxième type et l'axe d'écoulement (58') d'un passage d'écoulement (58) dudit troisième type; **en ce qu'**un deuxième plan (II) contient l'axe d'écoulement (25') du premier passage d'écoulement (25); et **en ce qu'**un troisième plan (III) contient l'axe d'écoulement (30') d'un passage d'écoulement (30) dudit deuxième type et l'axe d'écoulement (48') d'un passage d'écoulement (48) dudit troisième type.

11. Buse selon la revendication 9, **caractérisée en ce que** les axes d'écoulement (25', 30', 40', 48', 58') de tous les passages de sortie (25, 30, 40, 48, 58) s'étendent dans un plan qui coïncide afin de former un modèle de pulvérisation en éventail plat.

12. Buse selon l'une quelconque des revendications 9 à 11 précédentes, **caractérisée en ce que** la paroi (20) comprend plusieurs zones de paroi planes (22, 35, 45, 28, 53) qui contiennent chacune un passage de sortie respectif (25, 30, 40, 48, 58) et ont une surface qui est externe par rapport au passage d'écoulement (15) et s'étend perpendiculairement à l'axe d'écoulement (25', 30', 40', 48', 58') du passage de sortie (25, 30, 40, 48, 58) de la zone de paroi (22, 35, 45, 28, 53), lesdits plans (I), (II) et (III) s'étendant le long de l'extension de la flèche.

13. Buse selon l'une quelconque des revendications 9 à 12 précédentes, **caractérisée en ce que** le passage d'écoulement (15) a une section rectangulaire.

14. Buse selon l'une quelconque des revendications 9 à 13 précédentes, **caractérisée en ce que** les passages d'écoulement (25, 30, 40, 48, 58) ont une section circulaire.

15. Buse selon l'une quelconque des revendications 9 à 14 précédentes, **caractérisée en ce que** l'angle β est approximativement de 1,8 à 2,2 fois l'angle α.

16. Buse selon l'une quelconque des revendications 9 à 15 précédentes, **caractérisée en ce que** l'écoulement par unité de temps à travers les passages de sortie (25; 30; 40; 48; 58) constitue le rapport d'environ 1 : 0,8 : 0,7.
